# EUROPÄISCHE PATENTSCHRIFT

(11) **EP 2 348 137 B1**
(45) Veröffentlichungstag und Bekanntmachung des Hinweises auf die Patenterteilung: **17.08.2016**
(21) Anmeldenummer: 11002435.3
(22) Anmeldetag: 09.01.2009
(51) Int. Cl.: C22B 5/12, C22B 7/00, C22B 11/00

(54) **Verfahren zum Gewinnen von Ruthenium aus Ruthenium oder Rutheniumoxide enthaltenden Materialien oder Rutheniumhaltigen Edelmetall-Erzkonzentraten**
Method for generating ruthenium from materials or noble metal ore concentrates containing ruthenium or ruthenium oxide
Procédé d'obtention de ruthénium à partir de ruthénium ou de matériaux contenant des oxydes de ruthénium ou des concentrés de minerais de métaux précieux contenant du ruthénium

(30) Priorität: 30.01.2008 DE 102008006796
(43) Veröffentlichungstag der Anmeldung: 27.07.2011
(62) Teilanmeldung aus: 09000185.0
(73) Patentinhaber: Heraeus Deutschland GmbH & Co. KG, 63450 Hanau (DE)
(72) Erfinder: Meyer, Horst Dr., 63674 Altenstadt (DE); Grehl, Matthias, Dr., 63773 Goldbach (DE); Nowottny, Christian, Dr., 61330 Nidderau (DE); Stettner, Martin, 63674 Altenstadt (DE); Kralik, Joachim, Dr., 63450 Hanau (DE)
(74) Vertreter: Heraeus IP

(56) Entgegenhaltungen:
- EP-A- 1 114 796
- CN-A- 1 872 418
- DD-A1- 261 811
- JP-A- 59 104 438
- FATHI HABASHI: "Hanbook of Extractive Metallurgy (Vol. 3)", 1997, WILEY-VCH, WEINHEIM, XP002522074, * Seite 1292 - Seite 1306 *

## Beschreibung

Die Erfindung betrifft Verfahren zum Gewinnen von Ruthenium aus Ruthenium oder Rutheniumoxide enthaltenden Materialien oder rutheniumhaltigen Edelmetall-Erzkonzentraten, gegebenenfalls mit weiteren Reinigungsschritten zur Aufarbeitung von Ruthenium-Targets.

### Technischer Hintergrund

Rutheniumhaltige Materialien, in denen das Ruthenium in metallischer oder oxidischer Form vorliegt (Erzkonzentrate, pulvermetallurgisch hergestellte Targetmaterialien aus Rutheniummetall und -legierungen, sonstige Zementate), müssen für die weiteren Reinigungsoperationen aktiviert und in eine wasserlösliche Form gebracht werden.

Zur Mobilisierung und/oder Abtrennung von Ruthenium sind verschiedene Verfahren bekannt:
- Schmelzfluss mit KOH/KNO₃ und anschließende RuO₄-Bildung durch Oxidation der alkalischen Lösung mit Chlorgas (JP39019951; C.Claus, J. prakt. Chem. 79 [1860] 28),
- Oxidation und Auflösen in HCl oder HNO₃ mit Kaliumchlorat als Oxidationsmittel (F. Krauss, Z. anorg. Ch. 117 [1921] 115),
- Nutzung der Löslichkeit in Hypochlorit-Lösung (Howe, JACS 47 [1925] 2928),
- Alkoholfällung von Ruthenium aus stark alkalischer Lösung (C.Claus, J. prakt. Chem. 79 [1860] 28; L. Wöhler, Zeitschrift f. anorg. Chem. 139 [1924] 205-219),
- Behandlung von Ruthenatlösungen nacheinander mit Chlorat und Bromat (EP 1 114 795 A1),
- Erwärmen rutheniumhaltiger salzsaurer Edelmetall-Lösungen und anschliessende Zugabe von Chlorat sowie weiteres Erwärmen der entstehenden Suspension/Lösung auf 80 bis 90°C und Auffangen des entstehenden Rutheniumtetroxids (US 4,390,366),
- Oxidation von Alkaliruthenat in wässrigen Lösungen (DE 39 35 798 A1), bei dem die Oxidation mit Ozon bei pH-Werten oberhalb von 8 durchgeführt wird. Alternativ kann die vorhandene rutheniumhaltige Edelmetall-Lösung mittels Natriumchlorat und/oder Chlorgas destilliert werden,
- Oxidation von Ruthenium und Fällung als Oxidhydrat (DD 261 811).

### Aufgabe

Verfahren nach dem Stand der Technik haben folgende Nachteile: Königswasser oder konzentrierte Säuren/Chlorgas als Oxidationsmittel lösen Ruthenium nicht oder nur sehr langsam. In Natriumhypochloritlauge ist Ruthenium löslich, allerdings bildet sich hier zum Teil direkt das flüchtige Ruthenium (VIII)-oxid. Dadurch ist der Aufschlussschritt nicht vom Abtrennungsschritt zu trennen. Das in Erzkonzentraten enthaltene Selen stört die Reinigung der Edelmetalle in den weiteren Schritten, so dass dessen schnelle Ausschleusung möglichst zu Beginn des Scheideprozesses wünschenswert ist,

### Zusammenfassung der Erfindung

Durch Eintrag rutheniumhaltigen Materials und Nitrat als Oxidationsmittel in eine stark alkalische Kaliumhydroxidschmelze kann eine zufriedenstellende Mobilisierung des Rutheniums erreicht werden. Danach liegt Ruthenium als wasserlösliches Ruthenat (RuO₄)²⁻ vor. Nachfolgende Trennoperationen ermöglichen eine schnelle Ausbringung des Rutheniums sowie die Abtrennung von Selen. Weitere anschließende Reinigungsschritte erlauben die Aufarbeitung von Ruthenium-Targets.

### Detaillierte Beschreibung

Die Erfindung betrifft ein Verfahren nach Anspruch 1. Weitere vorteilhafte Merkmale sind den weiteren Ansprüchen zu entnehmen.

In Scheidgut enthaltenes Ruthenium wird durch Oxidation in einer alkalischen Schmelze in die wasserlösliche Ruthenat-Form gebracht. Aufgrund der Korrosivität der Schmelze ist dafür nicht jedes Tiegelmaterial geeignet. Als besonders geeignet haben sich Tiegel aus einer NickelbasisLegierung mit hohem Chrom-Anteil erwiesen, wie z. B.

| Typ | Bezeichnung | WST.-Nr. |
|---|---|---|
| INCONEL® 600 | G-Ni-Cr 15 Fe | 2.4816 |
| INCONEL® 601 | G-Ni-Cr 23 Fe | 2.4851 |
| INCONEL® 625 | G-Ni-Cr 22 Mo 9 Nb | 2.4856 |
| INCOLOY® 825 | 10-Ni-Cr 21 Mo | 2.4858 |
| HASTELLOY® C | G-Ni-Cr 18 Mo 16 | 2.4892 |
| HASTELLOY® C 276 | G-Ni Mo 16 Cr 15 W | 2.4819 |
| CARPENTER 20 CB 3 | G-Ni Cr 20 Cu Mo | 2.4660 |

Sie weisen sehr geringen Materialabrieb auf.

In einer möglichen Ausführungsform handelt es sich um eine Schmelze auf der Basis von Erzkonzentrat. Nach Oxidation und Lösen der erkalteten Schmelze in Wasser ist das enthaltene Ruthenium zu >80 % in Lösung gegangen. Es kann nach Filtration oder Abhebern vom unlöslichen Rückstand leicht durch Reduktion (z.B. mit Ethanol) ausgefällt und so abgetrennt werden. Alle Edelmetalle außer Ruthenium sind im Niederschlag enthalten. Dabei wird gegebenenfalls vorhandenes, in den weiteren Reinigungsschritten der sonstigen Edelmetalle stark störendes Selen quantitativ als Selenat gelöst und zusammen mit Ruthenium abgetrennt.

Als Reduktionsmittel sind neben Ethanol auch andere Alkohole wie Methanol, 1-Propanol, 2-Propanol oder Zucker wie z. B. Glucose geeignet.

Die erfindungsgemäßen Verfahren weisen folgende Vorteile auf:
Große Anteile des Rutheniumgehalts von Scheidgutmaterialien werden in kurzer Zeit aktiviert und mobilisiert, wobei Ruthenium in eine wasserlösliche Form überführt wird. Bei Materialien mit geringem Rutheniumgehalt wird mit nachfolgender Alkoholfällung eine Aufkonzentrierung des Rutheniums erreicht. Nachfolgende Reinigungsoperationen ermöglichen dann eine schnelle Abtrennung von im Scheidgut enthaltenen, weiteren Edel- und Buntmetallen.
In Erzkonzentraten enthaltenes Osmium geht aufgrund seiner ähnlichen chemischen Eigenschaften den Weg von Ruthenium und kann nach oben beschriebener Destillation durch einen weiteren Reaktionsschritt leicht vom Ruthenium abgetrennt werden (andere Aufschlusswege, bei denen die Edelmetalle in saurer Lösung erhalten werden, würden aufgrund der leichten Bildung und großen Flüchtigkeit von Osmium (VIII)-oxid zu sehr hohen Osmiumverlusten führen). Nach dem Lösen der erfindungsgemäß erhaltenen Schmelze aus Erzkonzentrat in Wasser ist Ruthenium für gewöhnlich zu >80 % in Lösung und wird nach Filtration oder Abhebern vom unlöslichen Rückstand leicht durch Reduktion (z. B. mit Ethanol) ausgefällt und so abgetrennt. Ebenso wird das in den weiteren Reinigungsschritten der sonstigen Edelmetalle stark störende Selen quantitativ als Selenat gelöst und kann so gut von den im Niederschlag enthaltenen Edelmetallen abgetrennt werden. Es ergibt sich dadurch ein effektiver Weg zur Ausspeisung von Selen durch Bildung von wasserlöslichen Selenaten. Diese bleiben in Lösung, wenn Ru (und ggf. Os) mit dem Reduktionsmittel, z. B. Ethanol, gefällt werden.

Der erfindungsgemäße Aufschluss kann mit Vorteil bei der Aufarbeitung von Ru-Targets eingesetzt werden. Das schließt weitere Schritte der Reinigung ein.

Die Erfindung betrifft somit auch Verfahren zum Gewinnen von Ruthenium aus Ruthenium Targets, wobei die zerkleinerten Targets direkt einer oben beschriebenen alkalisch oxidierenden Schmelze zugeführt werden. Die Targets können nennenswerte Anteile an Nichtedelmetallen wie Chrom enthalten.

Die Erfindung wird durch die folgenden Beispiele näher erläutert. Teile- und Prozentangaben beziehen sich wie in der übrigen Beschreibung auf das Gewicht, sofern nicht anders angegeben.
Beispiel 1: In einem Schmelztiegel bestehend aus einer Nickelbasislegierung werden 300 kg Kaliumhydroxid bei 400-450°C aufgeschmolzen. Wenn eine klare Schmelze entstanden ist, werden unter Rühren 100 kg getrocknetes Erzkonzentrat, enthaltend ca. 4-5 % (w/w) Ruthenium - mit 75 kg Natriumnitrat vorgemischt - in die Schmelze langsam eingetragen. Nach beendeter Zugabe wird die Temperatur auf 600°C erhöht und noch 5 Stunden nachgerührt. Vor der weiteren Bearbeitung lässt man die Schmelze erkalten.
Beispiel 2: In einem Schmelztiegel bestehend aus einer Nickelbasislegierung werden 300 kg Kaliumhydroxid bei 400-450°C aufgeschmolzen. Wenn eine klare Schmelze entstanden ist, werden unter Rühren 100 kg einer oxidhaltigen Rutheniumfeine, enthaltend ca. 30-40 % (w/w) Ruthenium, mit 50 kg Natriumnitrat vorgemischt, in die Schmelze langsam eingetragen. Nach beendeter Zugabe wird die Temperatur auf 600°C erhöht und noch 6 Stunden nachgerührt. Vor der weiteren Bearbeitung lässt man die Schmelze erkalten.
Beispiel 3: In einem Schmelztiegel bestehend aus einer Nickelbasislegierung werden 275 kg Kaliumhydroxid und 14 kg Natriumnitrat bei 400-450°C aufgeschmolzen. Wenn eine klare Schmelze entstanden ist, werden unter Rühren 53 kg einer metallische Rutheniumfeine, enthaltend ca. 98 % (w/w) Ruthenium, mit 41 kg Natriumnitrat vorgemischt, in die Schmelze langsam eingetragen. Nach beendeter Zugabe wird die Temperatur auf 600°C erhöht und noch 6 Stunden nachgerührt. Vor der weiteren Bearbeitung lässt man die Schmelze erkalten.
Beispiel 4: Eine gemäß Beispiel 1 erhaltene Schmelze wird in 800 I Wasser gelöst und bei Raumtemperatur absetzen gelassen. Man hebert ab und wäscht einige Male mit Wasser nach, wobei sämtliche Lösungen zu einem Gesamtvolumen von ca. 1200 I vereinigt werden. Durch Zugabe von 20 l Ethanol zur Lösung wird Ruthenium als wasserhaltiges Ruthenium (IV)-oxid gefällt und kann über eine Nutsche abfiltriert werden. Man erhält 25 kg feuchtes Ruthenium (IV)-oxid.

## Patentansprüche

1. Verfahren zum Gewinnen von Ruthenium aus Ruthenium oder Rutheniumoxide enthaltenden Materialien oder rutheniumhaltigen Edelmetall-Erzkonzentraten, mit den Schritten
**1A.** Eintrag des Materials in eine Alkalihydroxidschmelze in Gegenwart von Nitrat als
Oxidationsmittel unter Bildung eines oxidierten Schmelzrückstands mit wasserlöslichem Ruthenat (RuO₄)²⁻,
**1B.** Lösen des erhaltenen oxidierten Schmelzrückstandes in Wasser,
**1C.** Zugabe eines Reduktionsmittels,
**1D.** Fällung des entstandenen wasserhaltigen Ruthen (IV)-oxids.

2. Verfahren nach Anspruch 1, **dadurch gekennzeichnet, dass** Schritt **1A** in einer Apparatur aus einer Nickelbasislegierung durchgeführt wird.

3. Verfahren gemäß Anspruch 2, wobei die Nickelbasislegierung einen Cr-Anteil von mindestens 10 Gew.% hat.

4. Verfahren nach einem der vorstehenden Ansprüche, wobei die Alkalihydroxidschmelze eine KOH-Schmelze ist.

5. Verfahren nach einem der vorstehenden Ansprüche, wobei das Nitrat NaNO₃ ist.

6. Verfahren nach einem der vorstehenden Ansprüche, wobei das Reduktionsmittel der Gruppe bestehend aus Alkoholen und Zuckern angehört

7. Verfahren nach einem der vorstehenden Ansprüche, wobei das Reduktionsmittel der Gruppe bestehend aus Ethanol, Methanol, 1-Propanol, 2-Propanol und Glucose angehört.

## Claims

1. Process for recovering ruthenium from ruthenium- or ruthenium oxide-containing materials or ruthenium-containing precious metal-ore concentrates comprising the steps of
**1A.** Introducing the material into molten alkali hydroxide in the presence of nitrate as
oxidation agent while forming an oxidised melting residue with water- soluble ruthenate (Ru0₄)2⁻,
**1B.** dissolving the oxidised melting residue thus obtained in water,
**1C.** adding a reduction agent,
**1D.** precipitating the generated water-containing ruthenium(IV) oxide.

2. Process according to claim 1, **characterised in that** step **1A** is carried out in an apparatus made of a nickel-based alloy.

3. Process according to claim 2, whereby the nickel-based alloy comprises a Cr fraction of at least 10% by weight.

4. Process according to any one of the preceding claims, whereby the molten alkali hydroxide is molten KOH.

5. Process according to any one of the preceding claims, whereby the nitrate is NaNO₃.

6. Process according to any one of the preceding claims, whereby the reducing agent belongs to the group consisting of alcohols and sugars.

7. Process according to any one of the preceding claims, whereby the reducing agent belongs to the group consisting of ethanol, methanol 1-propanol, 2-propanol, and glucose.

## Revendications

1. Procédé d'extraction de ruthénium de matériaux contenant du ruthénium ou des oxydes de ruthénium ou de concentrés de minerai de métal précieux contenant du ruthénium, comprenant les étapes suivantes :
**1A**. Intégration du matériau dans une masse fondue d'hydroxyde alcalin en présence de nitrate
en tant qu'agent oxydant en formant un résidu de masse fondue oxydée avec du ruthénate hydrosoluble (Ru04)2-,
**1B**. Dissolution du résidu de masse fondue oxydée obtenu dans de l'eau,
**1C**. Ajout d'un réducteur,
**1D**. Précipitation de l'oxyde de ruthénium (IV) contenant de l'eau produit.

2. Procédé selon la revendication 1, **caractérisé en ce que** l'étape **1A** est exécutée dans un appareillage en alliage à base de nickel.

3. Procédé selon la revendication 2, dans lequel l'alliage à base de nickel a une teneur en Cr d'au moins 10 % en poids.

4. Procédé selon l'une des revendications précédentes, dans lequel la masse fondue d'hydroxyde alcalin est une masse fondue de KOH.

5. Procédé selon l'une des revendications précédentes, dans lequel le nitrate est du NaN0₃.

6. Procédé selon l'une des revendications précédentes, dans lequel le réducteur appartient au groupe composé des alcools et des sucres

7. Procédé selon l'une des revendications précédentes, dans lequel le réducteur appartient au groupe composé de l'éthanol, du méthanol, du propanol-1, du propanol-2 et du glucose.
